# EUROPÄISCHE PATENTANMELDUNG

(11) **EP 3 747 517 A1**
(43) Veröffentlichungstag der Anmeldung: **09.12.2020**
(21) Anmeldenummer: 20176880.1
(22) Anmeldetag: 27.05.2020
(51) Int. Cl.: A63F 13/98, A63F 13/24

(54) **CONTROLLER-MODUL ZUR ANBRINGUNG AN EINER STEUERVORRICHTUNG FÜR EINEN SPIELECOMPUTER**

(30) Priorität: 07.06.2019 DE 102019115632; 27.09.2019 DE 102019126131
(71) Anmelder: King-Controller GmbH & Co. KG, 20354 Hamburg (DE)
(72) Erfinder: FELDNER, Fabian Thore, 21279 Hollenstedt (DE); KÖNIG, Jan, 21614 Buxtehude (DE); STEER, Stefan Lajos Richard, 21614 Buxtehude (DE)
(74) Vertreter: dompatent von Kreisler Selting Werner - Partnerschaft von Patent- und Rechtsanwälten mbB

(57) **Zusammenfassung**

Controller-Modul (24) zur Anbringung an einer in der Hand eines Nutzers gehaltenen Steuervorrichtung (12) für einen Spielecomputer, mit mindestens einem Betätigungsknopf oder -hebel (30, 32, 34), dessen Betätigung ein elektronisches Signal auslöst, welches an eine erste elektrische oder elektronische Schnittstelle (44) des Controller-Moduls übertragen wird, wobei die Schnittstelle mit einer zweiten elektrischen oder elektronischen Schnittstelle (46) der Steuervorrichtung verbindbar ist, und wobei das Controller-Modul eine mechanische Verbindungsvorrichtung (40) zur Befestigung an der Steuervorrichtung aufweist.

## Beschreibung

Die Erfindung betrifft ein Controller-Modul zur Anbringung an einer in der Hand eines Nutzers gehaltenen Steuervorrichtung für einen Spielecomputer.

Bei dem Spielecomputer kann es sich um einen PC oder um eine Spielekonsole handeln. Die Steuervorrichtung wird drahtlos oder per Kabel mit dem Spielecomputer verbunden und wird in der Hand des Nutzers, der ein Computerspiel spielt, gehalten. Die Steuervorrichtung ermöglicht ein Bedienen verschiedener Funktionen des Spiels. Hierzu ist sie mit mindestens einem Betätigungsknopf oder -hebel versehen, dessen Betätigung ein elektronisches Signal auslöst, welches an eine elektrische Schnittstelle des Controller-Moduls übertragen wird.

Grundsätzlich besteht bei Nutzern von Spielecomputern ein Bedarf an individuell gestalteten Steuervorrichtungen, die auf bestimmte Funktionen des Computerspiels oder auf individuelle Fähigkeiten oder Wünsche des Nutzers ausgelegt sind.

Vor diesem Hintergrund liegt der Erfindung die Aufgabe zugrunde, die Bedienbarkeit einer herkömmlichen Steuervorrichtung für einen Spielecomputer individueller und vielseitiger zu gestalten.

Die Lösung der Aufgabe folgt mit dem Controller-Modul mit den Merkmalen von Patentanspruch 1.

Hierzu ist bei einem Controller-Modul zur Anbringung an einer in der Hand eines Nutzers gehaltenen Steuervorrichtung für einen Spielecomputer mindestens ein Betätigungsknopf oder Betätigungshebel vorgesehen, dessen Betätigung ein elektronisches Signal auslöst, welches an eine elektrische Schnittstelle des Controller-Moduls übertragen wird. Die elektrische Schnittstelle ist erfindungsgemäß mit einer elektrischen Schnittstelle der Steuervorrichtung verbindbar. Das Controller-Modul weist zudem eine mechanische Verbindungsvorrichtung zur Befestigung an der Steuervorrichtung auf.

Beispielsweise kann die Verbindung der elektrischen Schnittstelle des Controller-Moduls mit der elektrischen Schnittstelle der Steuervorrichtung kabelgebunden oder drahtlos erfolgen. Die Verbindung zwischen den beiden elektrischen Schnittstellen ermöglicht eine elektronische Signalübertragung zwischen den beiden Schnittstellen. Insbesondere sollen dadurch Steuerbefehle bzw. elektronische Signale, die durch Betätigung des Betätigungsknopfes oder Betätigungshebels des Controller-Moduls erzeugt werden, an die elektrische Schnittstelle der Steuervorrichtung übertragen werden. Die elektrische Schnittstelle der Steuervorrichtung ist typischerweise auch für den Empfang elektronischer Signale der Betätigungsknöpfe oder -hebel der Steuervorrichtung ausgebildet. In herkömmlicher Weise überträgt die elektrische Schnittstelle der Steuervorrichtung die generierten elektronischen Signale sämtlicher Betätigungsknöpfe bzw. Betätigungshebel an den Spielecomputer.

Die mechanische Verbindungsvorrichtung kann als Magnetverbindung ausgestaltet sein, um durch Magnetkraft an der Steuervorrichtung befestigt zu werden. Vorzugsweise ist das Controller-Modul an der Unterseite der Steuervorrichtung anbringbar. Alternativ oder ergänzend kann auch eine Klebeverbindung, Steckverbindung, Rastverbindung oder andersartig ausgestaltete mechanische Verbindung zwischen der Steuervorrichtung und dem Controller-Modul vorgesehen sein.

Vorzugsweise ist das Controller-Modul an der Unterseite der Steuervorrichtung anbringbar, um in besonders geeigneter Weise den Betätigungsknopf oder -hebel des Controller-Moduls mit den Fingern des Nutzers erreichen und bedienen zu können.

Vorteilhafterweise ist das Controller-Modul flach ausgebildet und weist eine Befestigungsseite zur Befestigung an der Steuervorrichtung auf. Die Befestigungsseite weist die Verbindungsvorrichtung auf, beispielsweise in Form eines Magneten oder Rast- oder Steckelements.

Das Controller-Modul weist vorteilhafterweise mehrere Betätigungsknöpfe und/oder Betätigungshebel auf, die jeweils so angeordnet sind, dass sie mit den Fingern des Nutzers besonders einfach erreichbar und betätigbar sind.

Hierzu sind vorteilhafterweise zumindest einige der Betätigungsknöpfe und/oder Betätigungshebel symmetrisch in Bezug auf eine Mittellängsachse des Controller-Moduls derart angeordnet, dass das Controller-Modul beidhändig betätigbar ist.

Das Controller-Modul kann einen flachen, ebenen Mittelteil und zwei auf einander gegenüberliegenden Seiten an den Mittelteil angrenzende gebogene Seitenteile aufweisen, wobei die Seitenteile zum Anlegen jeweils eines Fingers des Benutzers ausgebildet sind. Der Mittelteil kann hierbei die elektrische Schnittstelle aufweisen.

Die elektrische Schnittstelle ist vorzugsweise auf einer ersten Seite des Controller-Moduls ausgebildet, während der Betätigungsknopf und/oder Betätigungshebel auf der der elektrischen Schnittstelle gegenüberliegenden Seite ausgebildet sind.

Hierbei kann der Mittelteil und jedes der Seitenteile mindestens eine Verbindungsvorrichtung zur Befestigung des Controller-Moduls an der Steuervorrichtung aufweisen. Die Verbindungsvorrichtung ist jeweils vorzugsweise mit mindestens einem Magneten zur magnetischen Befestigung des Controller-Moduls an der Steuervorrichtung versehen.

Jeder Betätigungsknopf und/oder Betätigungshebel des Controller-Moduls ist vorteilhafterweise mit einer elektrischen Platine des Controller-Moduls verbunden, wobei die elektrische Platine mit der elektrischen Schnittstelle des Controller-Moduls verbunden ist.

Das Controller-Modul kann einen mit der elektrischen Schnittstelle verbundenen Akkumulator zum Speichern elektrischer Energie und zum Versorgen des Controller-Moduls und/oder der Steuervorrichtung mit elektrischer Energie aufweisen.

Zudem besteht die Erfindung auch in einer Kombination aus einer Steuervorrichtung für einen Spielecomputer und einem an der Steuervorrichtung anbringbaren Controller-Modul der oben beschriebenen Art. Vorzugsweise ist das Controller-Modul dabei mit einer zu der Steuervorrichtung komplementär zusammenpassenden Form versehen. Das Controller-Modul kann hierbei im mit der Steuervorrichtung verbundenen Zustand insbesondere vollständig vollflächig an der Oberfläche der Steuervorrichtung anliegen.

Das Controller-Modul kann vorteilhafterweise per Nut und Feder-Verbindung an der Steuervorrichtung anbringbar sein, wobei das Controller-Modul die Nut und die Steuervorrichtung die zugehörige, zu der Nut komplementären Feder aufweist. Alternativ kann die Steuervorrichtung die Nut und das Controller-Modul die zu der Nut zugehörige, komplementär ausgebildete Feder aufweisen.

Im Folgenden werden anhand der Figuren Ausführungsbeispiele der Erfindung näher erläutert. Es zeigen:
- Fig. 1: ein erstes Ausführungsbeispiel,
- Fig. 2: das Ausführungsbeispiel gemäß Fig. 1 in der Untersicht,
- Fig. 3: die Ansicht gemäß Fig. 2 mit an der Steuervorrichtung montiertem Controller-Modul,
- Fig. 4: eine Draufsicht auf das Controller-Modul,
- Fig. 5: das Controller-Modul gemäß Fig. 4 in der Untersicht,
- Fig. 6a: das Controller-Modul gemäß Fig. 4 im nicht an der Steuervorrichtung angebrachten Zustand,
- Fig. 6b: das Controller-Modul gemäß Fig. 6a im mit der Steuervorrichtung verbundenen Zustand,
- Fig. 7: das Innere des Controller-Moduls gemäß Fig. 4,
- Fig. 8: die Untersicht gemäß Fig. 3 eines zweiten Ausführungsbeispiels,
- Fig. 9: ein drittes Ausführungsbeispiel.

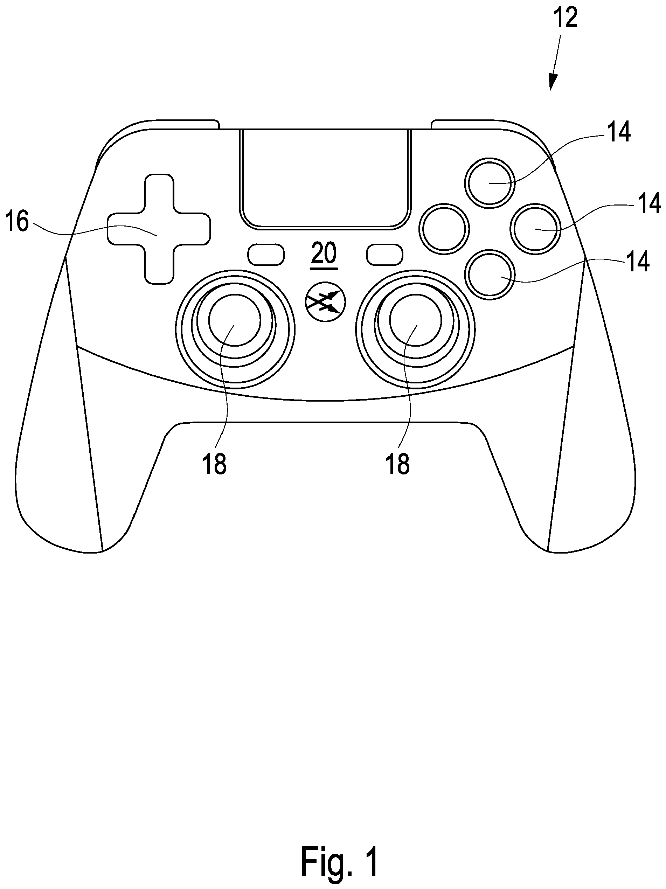

Fig. 1 zeigt eine Steuervorrichtung 12 mit Betätigungsknöpfen 14, einer Betätigungswippe 16 und Betätigungshebeln 18. Fig. 1 zeigt die Steuervorrichtung 12 in der Draufsicht, so dass deren Oberseite 20 erkennbar ist.

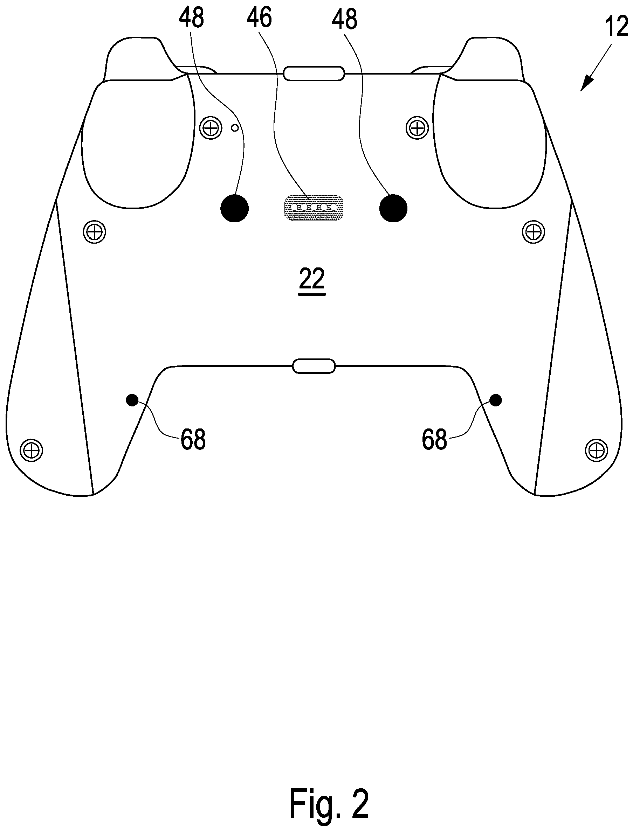

Fig. 2 zeigt die Steuervorrichtung 12 gemäß Fig. 1 in der Untersicht, so dass deren Unterseite 22 erkennbar ist. Die Steuervorrichtung 12 gemäß Fig. 2 ist noch mit keinem erfindungsgemäßen Controller-Modul 24 versehen.

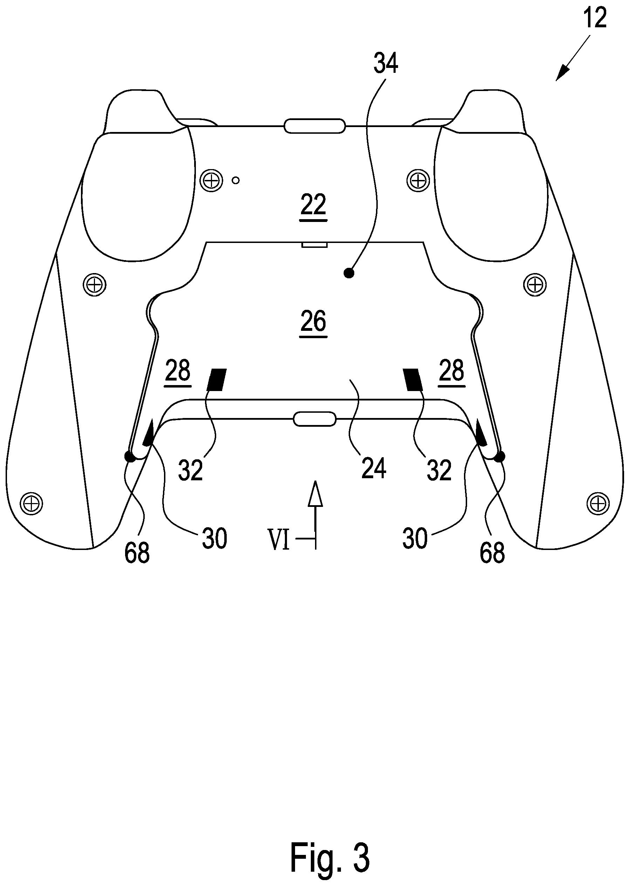

Fig. 3 zeigt die Steuervorrichtung 12 in der Ansicht gemäß Fig. 2 mit an der Steuervorrichtung montiertem Controller-Modul 24, die einen flachen, ebenen Mittelteil 26 und zwei auf einander gegenüberliegenden Seiten an den Mittelteil 26 angrenzende gebogene Seitenteile 28 aufweist, die zum Anlegen eines Fingers des Benutzers ausgebildet sind. Jeweils ein Betätigungsknopf 30 ist an einem der beiden Seitenteile 28 vorgesehen. Zwei weitere Betätigungsknöpfe 32 sind an dem Mittelteil 26 auf einander gegenüberliegenden Seiten in dessen Randbereichen vorgesehen. Ein weiterer Betätigungsknopf 34 ist im oberen, vorderen Bereich des Mittelteils 26 vorgesehen, welcher eine individuelle Einstellung der Positionen 30 und 32 ermöglicht.

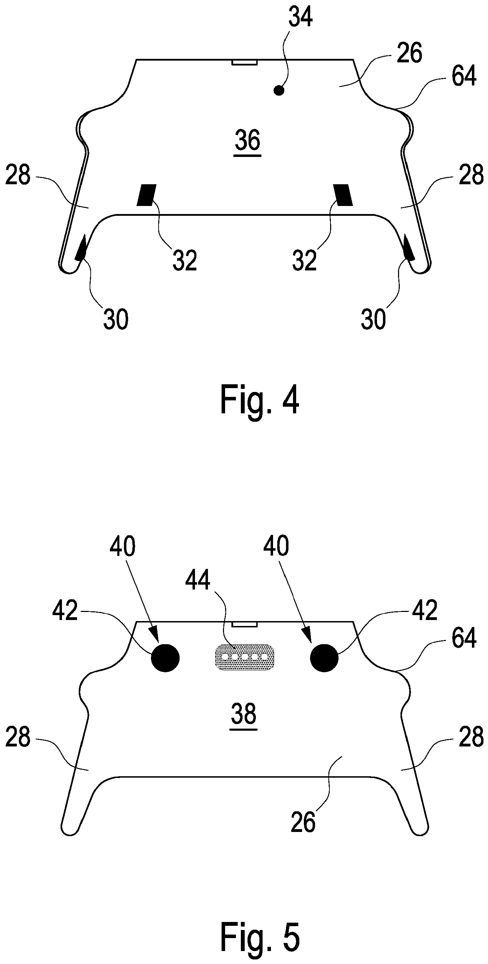

Das Controller-Modul 24 ist in den Figuren 4 und 5 dargestellt. Fig. 4 zeigt in der Draufsicht die Betätigungsseite 36 des Controller-Moduls 24. Auf der Betätigungsseite 36 sind die Betätigungsknöpfe 30, 32, 34 vorgesehen.

Fig. 5 zeigt in der Untersicht die der Betätigungsseite 36 gegenüberliegende Befestigungsseite 38, auf der eine Verbindungsvorrichtung 40 zur Befestigung an der Steuervorrichtung vorgesehen ist. Die Verbindungsvorrichtung 40 besteht im vorliegenden Fall aus zwei an den seitlichen Rändern des Mittelteils 26 angeordneten Magneten 42, die mit entsprechenden komplementären Magneten oder einer metallischen Fläche der Steuervorrichtung zusammengreifen, um das Controller-Modul 24 an der Steuervorrichtung 12 zu befestigen. Dabei sind die Seitenteile 28 derart geformt und gebogen, dass die Befestigungsseite 38 eine zu der Unterseite 22 der Steuervorrichtung 12 komplementäre Form aufweist und gegenüber der Steuervorrichtung 12 dadurch nicht verrutschen kann.

Mittig zwischen den beiden Magneten 42 der Verbindungsvorrichtung 40 ist das Controller-Modul 24 mit einer elektrischen Schnittstelle 44 versehen, die mit einer entsprechenden elektrischen Schnittstelle 46 an der Unterseite 22 der Steuervorrichtung 12 zusammengreift.

Fig. 2 zeigt die elektrische Schnittstelle 46 der Steuervorrichtung 12 und die zu beiden Seiten der Schnittstelle 46 vorgesehenen Magnete 48, die mit den Magneten 42 zusammengreifen und mit komplementärer Polung zu dem Magneten 42 ausgebildet sind.

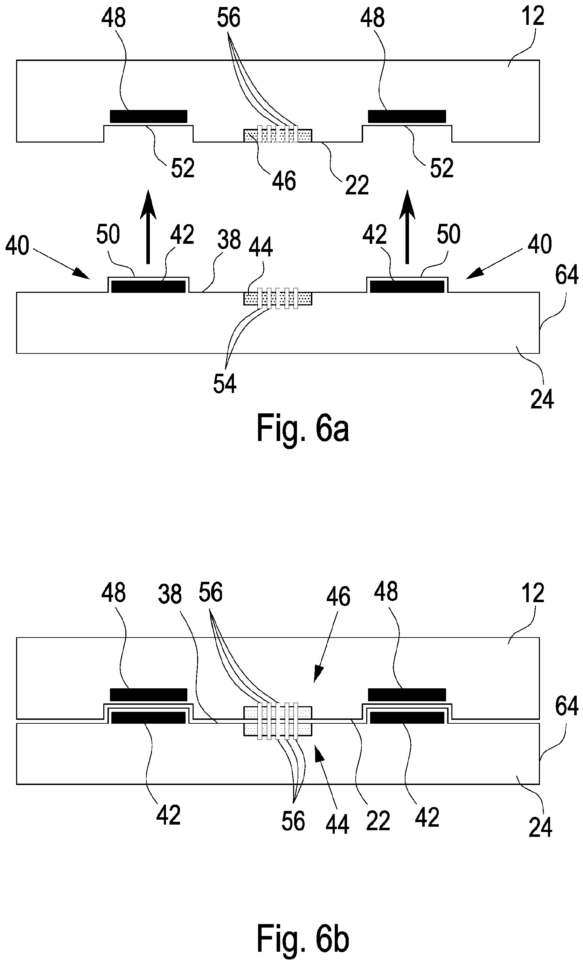

Fig. 6a zeigt in schematisch vereinfachter Darstellung eine Ansicht aus Richtung des Pfeils VI in Fig. 3 auf das Controller-Modul 24 und die Steuervorrichtung 12, um das Zusammengreifen der Verbindungsvorrichtung 40 und der elektrischen Schnittstellen 44, 46 darzustellen. Dabei ist erkennbar, dass das Controller-Modul 24 an seiner Befestigungsseite 38 Vorsprünge 50 aufweist, die jeweils aus der Oberfläche der Befestigungsseite 38 hervorragen. In den Vorsprüngen 50 sind die beiden Magnete 42 untergebracht, wobei jeder Vorsprung 50 genau einen Magneten 42 enthält.

Fig. 6a zeigt das Controller-Modul 24 im nicht an der Steuervorrichtung 12 angebrachten Zustand. Der verbundene Zustand zwischen Controller-Modul 24 und Steuervorrichtung 12 ist in Fig. 6b dargestellt. Dabei greifen die Vorsprünge 50 des Controller-Moduls 24 in komplementär zu den Vorsprüngen 50 ausgebildete Vertiefungen 52 an der Unterseite 22 der Steuervorrichtung 12. Hinter jeder der Vertiefungen 52 ist einer der komplementären Magneten 48 angeordnet. Der Zusammengriff zwischen Vertiefungen 52 und Vorsprüngen 50 verhindert ein gegenseitiges Verrutschen und Verschieben von Steuervorrichtung 12 und Controller-Modul 24, wenn das Controller-Modul 24 an der Steuervorrichtung 12 mit Hilfe der Kraft der Magneten 50, 52 befestigt ist.

Figuren 6a und 6b zeigen ferner die elektrischen Schnittstellen 44, 46, die jeweils als Kontaktplatinen mit Kontaktstiften 54, 56 ausgebildet sind. Im befestigten Zustand des Controller-Moduls ist ein elektrischer Kontakt zwischen einander zugeordneten Kontaktpins 54, 56 hergestellt.

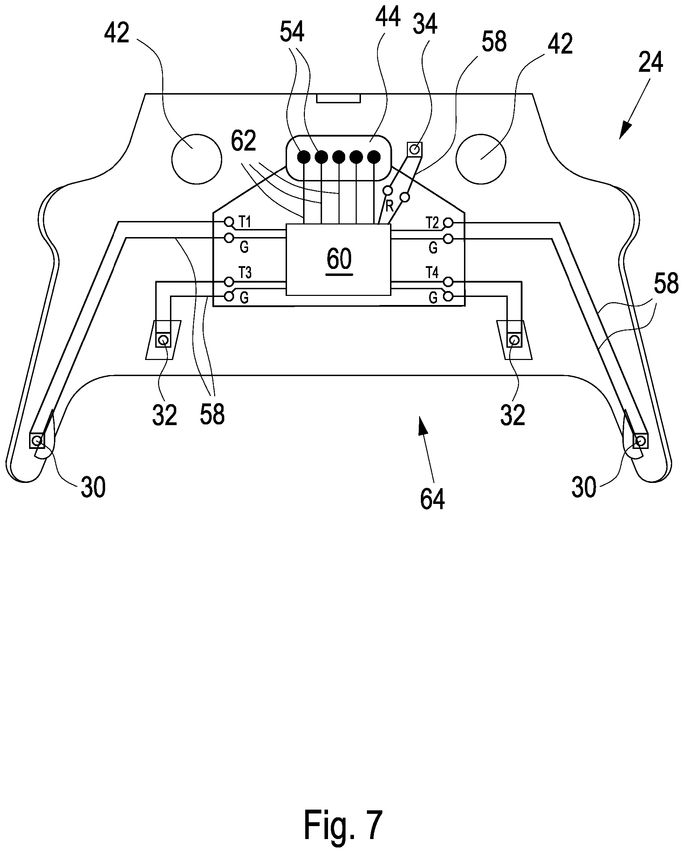

Fig. 7 zeigt das Innere des Controller-Moduls 24 und insbesondere die elektrische Kontaktierung zwischen den Betätigungsknöpfen 30, 32 und den Kontaktpins 54 der elektrischen Schnittstelle 44. Hierzu ist jeder der Betätigungsknöpfe 30, 32, 34 mit Mikroschaltern versehen, die über jeweilige elektrische Leiterbahnen 58 eine elektrische Platine 60 kontaktieren. Die elektronische Platine 60 ist wiederum über separate Leiterbahnen 62 mit den Kontaktpins 54 der elektrischen Schnittstelle 44 verbunden.

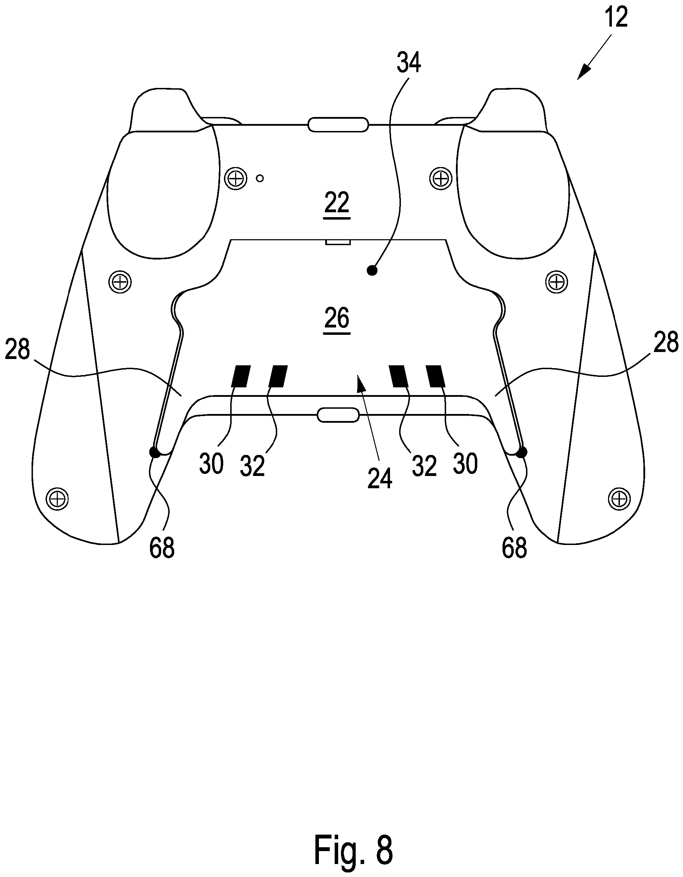

Fig. 8 zeigt die Untersicht gemäß Fig. 3 eines weiteren Ausführungsbeispiels, bei dem die Betätigungsknöpfe 30, 32 jeweils alle an der Betätigungsseite 34 im Bereich des Mittelteils 26 angeordnet sind.

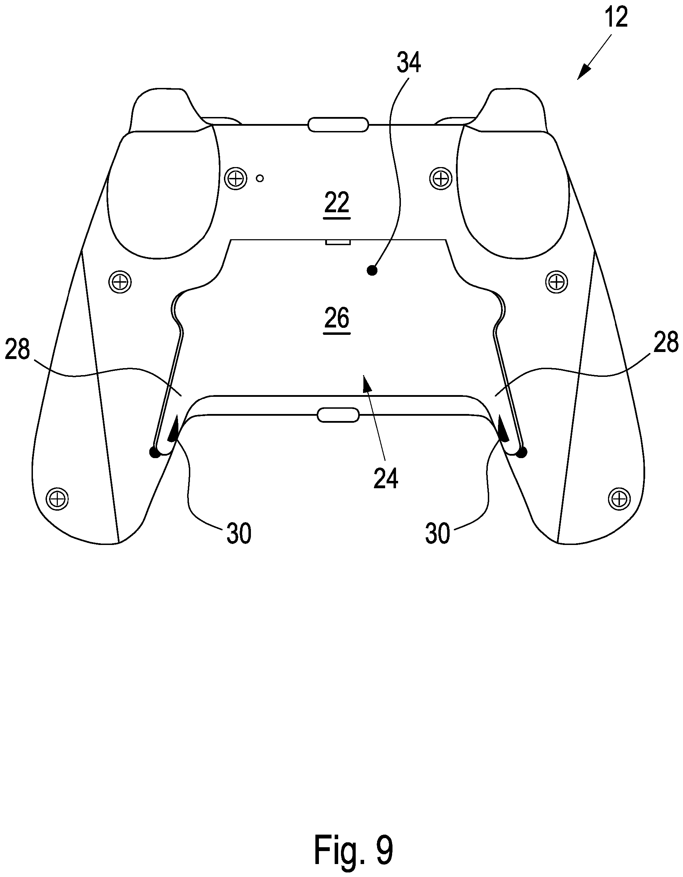

Ein weiteres Ausführungsbeispiel ist in Fig. 9 dargestellt, bei dem lediglich jeweils ein Knopf im Bereich eines der beiden Seitenteile 28 vorgesehen ist. Der Betätigungsknopf 34 in den Ausführungsbeispielen gemäß den Figuren 8 und 9 entspricht demjenigen des ersten Ausführungsbeispiels.

Die Elektronik zur Erzeugung, Weiterleitung und Verarbeitung der elektronischen Signale, die von den Betätigungsknöpfen 30, 32, 34 erzeugt werden, ist vollständig innerhalb des Controller-Moduls 24, d.h. innerhalb dessen Gehäuses, enthalten. Lediglich die Schnittstelle 44 mit den Kontaktpins 54 und die Betätigungsknöpfe 30, 32, 34 liegen nach außen hin frei. Das Controller-Modul 24 ist nicht flexibel und fungiert insofern nicht als Schaltpaddle, sondern ist vielmehr weitgehend starr, während die Flexibilität zur Betätigung durch die Betätigungsknöpfe 30, 32, 34 gegeben ist, die flexibel gegenüber dem Gehäuse 64 des Controller-Moduls zurückweichen.

Das Controller-Modul 24 liegt mit seiner Befestigungsseite 38 vollflächig an der Unterseite 22 der Steuervorrichtung 12 an, so dass ein vollflächiger Kontakt zwischen dem Controller-Modul 24 und der Steuervorrichtung 12 besteht, und nicht lediglich ein punktueller Kontakt in einem oder mehreren Befestigungspunkten.

Ferner ist eine Nut 68 und Feder-Verbindung zwischen dem Controller-Modul 24 und der Steuervorrichtung 12 geschaffen, um ein Verrutschen der beiden Elemente gegeneinander zu vermeiden.

## Patentansprüche

1. Controller-Modul (24) zur Anbringung an einer in der Hand eines Nutzers gehaltenen Steuervorrichtung (12) für einen Spielecomputer, mit mindestens einem Betätigungsknopf oder -hebel (30, 32, 34), dessen Betätigung ein elektronisches Signal auslöst, welches an eine erste elektrische oder elektronische Schnittstelle (44) des Controller-Moduls übertragen wird, wobei die Schnittstelle mit einer zweiten elektrischen oder elektronischen Schnittstelle (46) der Steuervorrichtung verbindbar ist, und wobei das Controller-Modul eine mechanische Verbindungsvorrichtung (40) zur Befestigung an der Steuervorrichtung aufweist.

2. Controller-Modul nach Anspruch 1, **dadurch gekennzeichnet, dass** die mechanische Verbindungsvorrichtung (40) eine Magnetverbindung ist.

3. Controller-Modul nach Anspruch 1 oder 2, **dadurch gekennzeichnet, dass** das Controller-Modul an der Unterseite (22) der Steuervorrichtung (12) anbringbar ist.

4. Controller-Modul nach einem der vorhergehenden Ansprüche, **dadurch gekennzeichnet, dass** das Controller-Modul (24) flach ausgebildet ist und eine Befestigungsseite (38) zur Befestigung an der Steuervorrichtung aufweist, die mit der Verbindungsvorrichtung versehen ist, und eine der Befestigungsseite (38) gegenüberliegende Betätigungsseite (36) aufweist, die mindestens einen Betätigungsknopf oder -hebel (30, 32, 34) aufweist.

5. Controller-Modul nach einem der vorhergehenden Ansprüche, **dadurch gekennzeichnet, dass** mehrere Betätigungsknöpfe und/oder -hebel (30, 32, 34) vorgesehen sind.

6. Controller-Modul nach Anspruch 5, **dadurch gekennzeichnet, dass** die Betätigungsknöpfe und/oder -hebel symmetrisch in Bezug auf eine Mittellängsachse des Controller-Moduls derart angeordnet sind, dass das Controller-Modul beidhändig betätigt werden kann.

7. Controller-Modul nach einem der vorhergehenden Ansprüche, **dadurch gekennzeichnet, dass** das Controller-Modul einen flachen, ebenen Mittelteil (26) und zwei auf einander gegenüberliegenden Seiten an den Mittelteil angrenzende gebogene Seitenteile (28) aufweist, wobei die Seitenteile zum Anlegen jeweils eines Fingers des Benutzers ausgebildet sind.

8. Controller-Modul nach Anspruch 7, **dadurch gekennzeichnet, dass** der Mittelteil (26) die erste Schnittstelle (44) aufweist.

9. Controller-Modul nach einem der vorherigen Ansprüche, **dadurch gekennzeichnet, dass** die erste Schnittstelle (44) auf einer ersten Seite (38) des Controller-Moduls und der Betätigungsknopf und/oder -hebel (30, 32, 34) auf der der ersten Schnittstelle gegenüberliegenden Seite (36) ausgebildet ist.

10. Controller-Modul nach einem der vorhergehenden Ansprüche, **dadurch gekennzeichnet, dass** der Mittelteil und jedes der Seitenteile mindestens eine Verbindungsvorrichtung (40) aufweist, die jeweils vorzugsweise mindestens einen Magneten (42) zur magnetischen Befestigung des Controller-Moduls an der Steuervorrichtung aufweist.

11. Controller-Modul nach einem der vorhergehenden Ansprüche, **dadurch gekennzeichnet, dass** jeder Betätigungsknopf und/oder -hebel mit einer elektrischen oder elektronischen Platine (60) des Controller-Moduls verbunden sind, wobei die Platine (60) mit der ersten Schnittstelle (44) verbunden ist.

12. Controller-Modul nach einem der vorhergehenden Ansprüche, **dadurch gekennzeichnet, dass** das Controller-Modul einen mit der ersten Schnittstelle (44) verbundenen Akkumulator zum Speichern elektrischer Energie und zum Versorgen des Controller-Moduls und/oder der Steuervorrichtung mit elektrischer Energie aufweist.

13. Kombination aus einer Steuervorrichtung für einen Spielecomputer und einem an der Steuervorrichtung anbringbaren Controller-Modul nach einem der vorhergehenden Ansprüche, wobei das Controller-Modul mit einer zu der Steuervorrichtung komplementär zusammenpassenden Form versehen ist.

14. Kombination nach Anspruch 13 **dadurch gekennzeichnet, dass** das Controller-Modul im mit der Steuervorrichtung verbundenen Zustand vollständig vollflächig an der Oberfläche der Steuervorrichtung anliegt.

15. Kombination nach einem der vorhergehenden Ansprüche, **dadurch gekennzeichnet, dass** das Controller-Modul per Nut und Feder-Verbindung an der Steuervorrichtung anbringbar ist, wobei das Controller-Modul die Nut und die Steuervorrichtung die zugehörige, komplementäre Feder aufweisen oder umgekehrt.
